# EUROPÄISCHE PATENTSCHRIFT

(11) **EP 1 007 928 B1**
(45) Veröffentlichungstag und Bekanntmachung des Hinweises auf die Patenterteilung: **03.07.2002**
(21) Anmeldenummer: 99929064.6
(22) Anmeldetag: 30.04.1999
(51) Int. Cl.: G01L 5/24, F16B 31/02

(54) **VERFAHREN UND VORRICHTUNG ZUM PRÜFEN VON SCHRAUBVERBINDUNGEN**
METHOD AND DEVICE FOR CHECKING SCREWED CONNECTIONS
PROCEDE ET DISPOSITIF POUR CONTROLER DES ASSEMBLAGES VISSES

(30) Priorität: 30.04.1998 DE 19819301
(43) Veröffentlichungstag der Anmeldung: 14.06.2000
(73) Patentinhaber: Löffler, Thomas, 83714 Miesbach (DE)
(72) Erfinder: Löffler, Thomas, 83714 Miesbach (DE)
(74) Vertreter: Kern, Gerbert
(86) Internationale Anmeldenummer: DE9901279
(87) Internationale Veröffentlichungsnummer: WO9957532

(56) Entgegenhaltungen:
- WO-A-98/35791
- FR-A- 1 512 090
- US-A- 3 943 819

## Beschreibung

Die Erfindung betrifft ein Verfahren und eine Vorrichtung zum Prüfen einer Schraubverbindungen und kann bevorzugt zur Kontrolle einer Schraubverbindung in der industriellen Produktion, im Werkstattbetrieb und zur Überwachung in der Anlagentechnik beim Vorliegen hoher Sicherheitserfordernisse eingesetzt werden. Die Erfindung betrifft weiterhin Spezialschrauben zur Durchführung des Verfahrens.

Aus dem Stand der Technik ist bekannt, daß in der industriellen Produktion immer häufiger elektronisch gesteuerte Schraubsysteme eingesetzt werden, die mit einem vorbestimmten Einschraubmoment die Schrauben anziehen um die zu verschraubenden Bauteile mit einer vorbestimmten Kraft aneinander zu pressen. Diese Kraft wird als Vorspannkraft bezeichnet und entsteht durch die Längenänderung des Schraubenschaftes, die nachfolgend als Längung bezeichnet wird.

In vielen Anwendungsfällen ist es notwendig, die Vorspannkraft auch nach der Herstellung der Verbindung mit einer hohen Genauigkeit zu bestimmen. Damit kann z.B. beim Kundendienst die Güte der Verbindung geprüft werden, ohne daß die Verbindung gelöst und erneut hergestellt werden muß.

Es ist aus dem Stand der Technik bekannt, die Prüfung der Vorspannkraft einer Schraubverbindung indirekt über die Messung des Lösemoment oder des Weiterdrehmoments zu prüfen. Diese Verfahren sind jedoch aufgrund der Reibschwankungen im Schraubengewinde und unter dem Schraubenkopf sowie dem Wechsel zwischen Haft- und Gleitreibung sehr ungenau und zudem wird die Vorspannkraft während des Prüfvorgangs verändert.

Um den Einfluß der Reibung bei der Prüfung zu verringern, sind Verfahren bekannt, welche die Vorspannkraft der Schraubenverbindung durch Messung der Verlängerung des Schraubenschaftes unter dem Einfluß der Vorspannkraft ermitteln. Ursprünglich beschränkten sich Verfahren dieser Art auf den Einsatz von Spezialschrauben mit einer vom Schraubenkopf ausgehenden koaxialen Sackbohrung, in der sich ein im Bohrungsgrund festgelegter, sonst aber freier Bohrkern oder Kernstab befindet. Nach FR - A - 1 512 090 weist eine solche Spezialschraube eine vom Schraubenkopf ausgehende Kemlochbohrung auf, in der der innere Bohrkern aus dem Material der Schraube besteht und etwa die Länge der Sackbohrung aufweist. Bei Einsatz der bekannten Spezialschraube verlängert sich der Schraubenschaft unter dem Einfluß der Vorspannkraft, während die Länge des Bohrkems gleich bleibt. Durch visuelle Feststellung des Abstandes des freien Endes des Bohrkerns vom öffnungsrand der Sackbohrung am Schraubenkopf kann angenähert auf eine bestimmte Vorspannkraft geschlossen werden. Allerdings muß die Ausgangslänge der Kemlochbohrung in der ungespannten Spezialschraube möglichst genau bekannt sein. Für die Praxis der Serienmontage wünscht man sich allerdings die Benutzung preiswerter Schrauben mit groben Toleranzen.

In US - A - 3 943 819 ist ein sehr aufwendiges Verfahren zur Bestimmung der Vorspannkraft in einer Spezialschraube mit vom Schraubenkopf ausgehender axialer Sackbohrung geoffenbart. In die Sackbohrung ragen nicht nur ein am Bohrungsgrund festgelegter Kernstab sondern noch zusätzlich eine koaxiale Kemhülse, die kürzer ist als der Kernstab und am inneren Hülsenende in einem Bereich zwischen Bohrungsgrund und Bohrungsöffnung mit dem Schraubenschaft verbunden ist. Mittels eines mechanischen Längenmeßgeräts können verschiedene Längenänderungen in verschiedenen Bereichen des Schraubenschaftes unter dem Einfluß einer Vorspannkraft gemessen und gewisse Störfaktoren bei der nachfolgenden Berechnung der Vorspannkraft ausgeschlossen werden. Auch dieses bekannte Verfahren eignet sich nicht für den Einsatz in der Produktion von Massengütem wegen des zu großen materiellen Aufwands.

Eine weitere Möglichkeit zur Prüfung der Vorspannkraft besteht darin, Ultraschall in eine Schraube einzuleiten und die Laufzeit des Schalls in der Schraube zu messen. Durch die Einleitung von Longitudinal- und Transversalwellen ist es theoretisch möglich, die Längenänderung des Schraubenschaftes unter dem Einfluß der herrschenden Vorspannkraft zu messen und die Vorspannkraft selbst zu bestimmen, ohne daß die Ausgangslänge der Schraube ohne Vorspannung vorher bekannt sein muß. In der Praxis des Verfahrens treten allerdings große technische Schwierigkeiten auf. Nur Schrauben mit bestimmter Geometrie können verwendet werden. Das Einleiten der Transversalwellen des Ultraschalls ist äußerst schwierig und die Genauigkeit des Verfahrens ist geringer als bei den anderen Verfahren, die sonst bei der Herstellung von Schraubverbindungen zum Einsatz kommen.

Der Erfindung liegt die Aufgabe zugrunde, die Prüfung der Qualität von Schraubverbindungen zu verbessern, um die Probleme im Stand der Technik zu überwinden. Diese Aufgabe wird erfindungsgemäß durch ein Prüfverfahren und eine Prüfvorrichtung gelöst, wie sie in den beigefügten Patentansprüchen angegeben sind.

Das Prüfverfahren für Schraubverbindungen nach Patentanspruch 1 weist folgende Verfahrensschritte auf:
- Bestimmen der ursprünglichen Länge der Spezialschraube durch Messen der Länge des Kerns des Kernlochs,
- Bestimmen der Länge der Spezialschraube im gespannten Zustand durch Messen des Abstandes vom Schraubenkopf zum Bohrungsgrund,
- Vergleichen der erfaßten Längenmeßwerte mit vorbestimmten Daten, wobei nach vorbestimmten Kriterien ermittelt wird, ob die Vorspannkraft ausreicht oder ob die Schraube nachgezogen werden muß.

Der Hauptvorteil des Verfahrens besteht darin, daß die ursprünglichen Länge der Spezialschraube durch Messen der Länge des Kerns des Kernlochs bestimmt werden kann, da sich der Kern beim Anziehen der Schraube nicht dehnt. Da bei der Herstellung der Kernlochbohrung die Kernlänge und die Bohrungstiefe immer genau gleich groß sind, ist es lediglich notwendig, die Länge der Bohrung der gedehnten Schraube mit der Länge des ungedehnten Kerns zu vergleichen. Die Differenz der zwei Meßergebnisse ist die Längung des Schraubenschaftes unter Vorspannung, aus der nunmehr nach dem Fachmann bekannten Beziehungen die Vorspannkraft errechnet werden kann.

Vorteilhafte Weiterbildungen des Verfahrens sind aus den Ansprüchen 2 bis 4 entnehmbar.

Zur Messung der Tiefe der Kernlochbohrung und der Länge des Kerns können aus dem Stand der Technik bekannte Meßverfahren eingesetzt werden. Insbesondere ist es auch möglich, für die Messung der Tiefe und der Länge unterschiedliche Meßverfahren einzusetzen. Entscheidend ist lediglich, daß die Meßverfahren die Bedingungen hinsichtlich Genauigkeit und Zuverlässigkeit erfüllen.

Die Prüfvorrichtung für Schraubverbindungen nach Patentanspruch 5 weist folgende Merkmale auf: Eine Längenmeßvorrichtung, die den Abstand der Grundfläche der Kernlochbohrung zum Schraubenkopf und den Abstand der Stirnfläche des Kerns der Kernbohrung zum Schraubenkopf bestimmt.

Die Vorteile der Prüfvorrichtung liegen darin, daß die im Stand der Technik verfügbaren Längenmeßvorrichtung alle hier gestellten Anforderungen weitgehend erfüllen können und kostengünstig zu erwerben sind, so daß je nach Anforderung eine optimale Konfiguration gleicher oder unterschiedlicher Meßsysteme zuammengestellt werden kann.
Vorteilhafte Weiterbildungen der Vorrichtung sind aus den Ansprüchen 6 bis 9 entnehmbar.

Nach Anspruch 6 stellen die Längenmeßvorrichtungen elektrische Meßdaten bereit, die einer Datenverarbeitungseinheit zugeführt werden, wobei die Meßdaten mit gespeicherten Daten verglichen werden und entschieden wird, ob die Vorspannkraft ausreichend ist, oder ob die Schraube nachgezogen werden muß. Das Nachziehen der Schraube kann mit den aus dem Stand der Technik bekannten Techniken erfolgen, also auch von Hand oder an einem anderen Arbeitsplatz.

Nach Anspruch 7 ist zusätzlich eine Anzieh-Vorrichtung vorgesehen, die bei einer Nachzieh-Entscheidung der Datenverarbeitungseinheit die Schraube so weit nachzieht, bis die vorgesehene Vorspannung erreicht ist. Anschließend kann bei erhöhter Genauigkeitsanforderung die Schraubverbindung erneut überprüft werden.

Die Schraube kann einen Ringspalt aufweisen, der mit einem geeigneten Material abgedeckt oder verfüllt ist. Dazu sind z. B. elastische Massen oder auch Fette geeignet.

Weitere Maßnahmen und Vorteile der Erfindung ergeben sich aus der nachfolgenden Beschreibung der Ausführungsbeispiele in Verbindung mit den beigefügten schematischen Zeichnung, wobei sich die Erfindung auf alle daraus entnehmbaren neuen Merkmale oder Merkmalskombinationen richtet, auch wenn diese nicht ausdrücklich in den Ansprüchen angeführt sind.

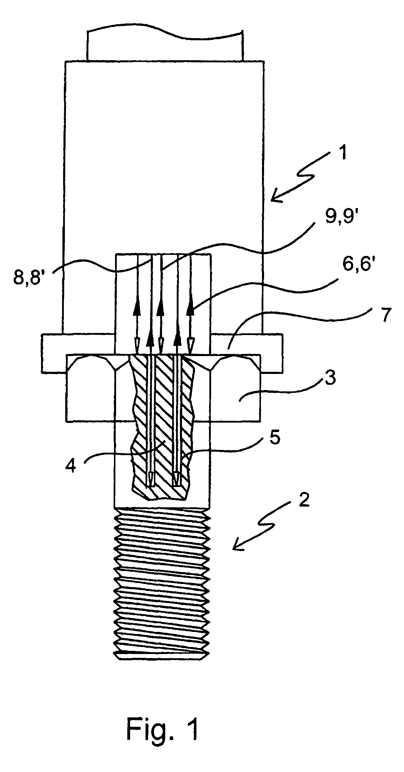

- Fig. 1: zeigt eine optische Ausführungsform der Vorrichtung auf einer Kernlochschraube.

Die Vorrichtung 1 sitzt auf dem Kopf 3 der Schraube 2, die eine Kernlochborung mit einem Bohrungskern 4 und einem Ringspalt 5 aufweist. In der Vorrichtung 1 ist ein optische Längenmeßeinrichtung (nicht gezeigt) angeordnet, die Meßlichtstrahlen 6 auf eine definierte Oberfläche 7 am Schraubenkopf 3 aussendet. Die Meßlichtstrahlen 6 werden von der Oberfläche 7 reflektiert als Reflektionsstrahl 6' von der Längenmeßeinrichtung empfangen. Ebenso werden Meßlichtstrahlen 8 vom Boden des Ringspaltes als Reflektionsstrahlen 8' reflektiert und von von der Längenmeßeinrichtung empfangen. Weiterhin werden Meßlichtstrahlen 9 von der Stirnfläche des Bohrungskerns 4 als Reflektionsstrahlen 9' reflektiert und von von der Längenmeßeinrichtung empfangen.

Vor dem Anziehen der Schraube waren der Bohrungskern 4 und der Ringspalt 5 gleich lang. Beim Anziehen der Schraube längt sich der Schraubenschaft, wödurch sich die Länge des Ringspaltes 5 bezogen auf die Fläche 7 vergrößert, während die Länge des Bohrungskerns 4 unverändert bleibt. Aus diesem Effekt ergibt sich die Möglichkeit, die ursprüngliche Länge des Ringspaltes 5 nach folgender Gleichung zu bestimmen:

Ursprüngliche Länge des Ringspaltes = aktuelle Länge der Ringspaltes (bezogen auf die Oberfläche 7) minus der Höhendifferenz zwischen der Oberfläche 7 und der Stirnfläche des Bohrungskerns 4.

Da nunmehr die ursprüngliche absolute Länge bzw. Tiefe und die aktuelle Länge bzw. Tiefe der Kernbohrung bekannt sind, kann der Fachmann mit den bekannten Berechnungsverfahren der Festigkeitsmechanik in Verbindung mit den bekannten Abmaßen der Schraube und deren E-Modul die Vorspannkraft berechnen.

## Patentansprüche

1. Verfahren zum Prüfen der Vorspannkraft einer Schraubverbindung mit einer Spezialschraube, die zwei Bauteile mit der Vorspannkraft aneinanderpreßt, wobei die Spezialschraube im Schraubenschaft ein einstückiges Kernloch aufweist, **gekennzeichnet durch** folgende Verfahrensschritte:
- Bestimmen der ursprünglichen Länge der Spezialschraube **durch** Messen der Länge des Kerns des Kernlochs,
- Bestimmen der Länge der Spezialschraube im gespannten Zustand **durch** Messen des Abstandes vom Schraubenkopf zum Bohrungsgrund,
- Vergleichen der erfaßten Längenmeßwerte mit vorbestimmten Daten, wobei nach vorbestimmten Kriterien ermittelt wird, ob die Vorspannkraft ausreicht oder ob die Schraube nachgezogen werden muß.

2. Verfahren nach Anspruch 1, **dadurch gekennzeichnet, daß** die Länge des Kerns des Kernlochs und die Länge der Kernlochbohrung durch mechanische oder optische Meßverfahren oder durch Ultraschallmeßverfahren gemessen wird.

3. Verfahren nach Anspruch 2, **dadurch gekennzeichnet, daß** je nach Anforderung unterschiedliche Meßverfahren kombiniert werden, wobei für die Abstände zur Kernoberfläche oder zum Schraubenkopf mit anderen Meßverfahren bestimmbar sind, wie z. B. induktiv oder kapazitiv.

4. Verfahren nach einem der vorhergehenden Ansprüche, **dadurch gekennzeichnet, daß** die Temperatur in der Nähe der Schraubverbindung gemessen wird und temperaturbedingte Meßfehler kompensiert werden.

5. Vorrichtung zum Prüfen der Vorspannkraft einer Schraubverbindung mit einer Spezialschraube, die zwei Bauteile mit der Vorspannkraft aneinanderpreßt, wobei die Spezialschraube im Schraubenschaft ein einstückiges Kernloch aufweist, **gekennzeichnet durch** eine Längenmeßvorrichtung, die den Abstand der Grundfläche der Kernlochbohrung zum Schraubenkopf und den Abstand der Stirnfläche des Kerns der Kernbohrung zum Schraubenkopf bestimmt.

6. Vorrichtung nach Anspruch 5, **dadurch gekennzeichnet, daß** die Längenmeßvorrichtungen elektrische Meßdaten bereitstellen, die einer Datenverarbeitungseinheit zugeführt werden, wobei die Meßdaten mit gespeicherten Daten verglichen werden und entschieden wird, ob die Vorspannkraft ausreichend ist oder ob die Schraube nachgezogen werden muß.

7. Vorrichtung nach Anspruch 6, **dadurch gekennzeichnet, daß** zusätzlich eine Anzieh-Vorrichtung vorgesehen ist, die bei einer Nachzieh-Entscheidung der Datenverarbeitungseinheit die Schraube so weit nachzieht, bis die vorgesehene Vorspannung erreicht wird.

8. Vorrichtung nach einem der Ansprüche 5 bis 7, **dadurch gekennzeichnet, daß** die Längenmeßvorrichtungen je nach Anforderung optische, mechanische, induktive oder kapazitive Meßsysteme aufweist.

9. Verfahren nach Anspruch 8, **dadurch gekennzeichnet, daß** je nach Anforderung unterschiedliche Meßsysteme kombiniert werden.

## Claims

1. A method of checking the prestress force of a screwed connection with a special screw pressing two parts together with a prestress force, where the special screw has a one-piece core hole in the screw shaft, **characterized by** the following process steps:
• determining the original length of the special screw by measuring the length of the core of the core hole,
• determining the length of the special screw in the stressed state by measuring the distance from the screw head to the base of the bore,
• comparing the measured length values thus obtained with predetermined data, determining according to predetermined criteria whether the prestress force is sufficient or whether the screw must be tightened further.

2. A method according to claim 1, **characterized in that** the length of the core of the core hole and the length of the core hole bore are measured by mechanical or optical measurement methods or by ultrasonic measurement methods.

3. A method according to claim 2, **characterized in that** different measurement methods are combined, depending on the requirements, where the distances to the core surface or to the screw head can be determined with other measurement methods, e.g., inductive or capacitive methods.

4. A method according to one of the preceding claims, **characterized in that** the temperature is measured near the screwed connection and temperature-induced measurement errors are compensated.

5. A device for checking the prestress force of a screwed connection with a special screw, which presses two parts together with a prestress force, where the special screw has a one-piece core hole in the screw shaft, **characterized by** a length measuring device which determines the distance from the base of the core hole bore to the screw head and the distance from the end face of the core of the core bore to the screw head.

6. A device according to claim 5, **characterized in that** the length measuring device supplies electric measurement data which are sent to an electronic data processing unit where the measured data is compared with stored data and a decision is made regarding whether the prestress force is sufficient or whether the screw must be tightened further.

7. A device according to claim 6, **characterized in that** a tightening device is also provided, which tightens the screw further after the electronic data processing unit has made a decision to tighten it further until reaching the intended prestress force.

8. A device according to one of claims 5 through 7, **characterized in that** the length measuring device has optical, mechanical, inductive or capacitive measurement systems, depending on requirements.

9. A method according to claim 8, **characterized in that** different measurement systems are combined, depending on requirements.

## Revendications

1. Procédé permettant de vérifier la force de précontrainte d'une connexion à vis à l'aide d'une vis spéciale serrant deux composants l'un sur l'autre par la force de précontrainte, la vis spéciale présentant dans la tige de vis un carottage d'une pièce, ce procédé étant **caractérisé par** les phases suivantes :
- détermination de la longueur initiale de la vis spéciale en mesurant la longueur du noyau du carottage,
- détermination de la longueur de la vis spéciale à l'état tendu en mesurant la distance entre la tête de vis et le fond du carottage,
- comparaisons des longueurs mesurées avec des données prédéfinies, tout en vérifiant, sur la base de critères prédéfinis, si la force de précontrainte est suffisante ou bien s'il est nécessaire de procéder à un resserrage de la vis.

2. Procédé selon la revendication 1, **caractérisé par le fait que** la longueur du noyau du carottage et la longueur du carottage sont mesurées au moyen de procédés de mesure mécanique ou optique ou bien par un procédé de mesure par ultrasons.

3. Procédé selon la revendication 2, **caractérisé par le fait que,** selon les impératifs définis, on combinera différents procédés de mesure, les distances jusqu'à la surface du noyau ou jusqu'à la tête de vis pouvant être mesurées au moyen d'autres procédés de mesure, comme par exemple de manière inductive ou capacitive.

4. Procédé selon l'une des revendications mentionnées ci-dessus, **caractérisé par le fait que** la température à proximité de la connexion à vis est mesurée et que des erreurs de mesurage conditionnées par la température sont compensées.

5. Dispositif permettant de vérifier la force de précontrainte d'une connexion à vis à l'aide d'une vis spéciale serrant deux composants l'un sur l'autre par la force de précontrainte, la vis spéciale présentant dans la tige de vis un carottage d'une pièce, **caractérisé par** un dispositif de mesure de la longueur qui détermine la distance entre la surface de base du carottage et la tête de vis ainsi que la distance entre la face avant du noyau du carottage et la tête de vis.

6. Dispositif selon la revendication 5, **caractérisé par le fait que** les dispositifs de mesure de longueur fournissent des données de mesure électriques qui sont mises à la disposition d'un poste de traitement de données, les mesures étant comparées à des données sauvegardées, ce qui permet de décider si la force de précontrainte est suffisante ou bien s'il est nécessaire de procéder à un resserrage de la vis.

7. Dispositif selon la revendication 6, **caractérisé par le fait qu'**il prévoit en outre un dispositif de serrage qui, si une décision de resserrage de la vis, déclenchée par le poste de traitement de données, est prise, procède au resserrage de la vis jusqu'à ce que la force de précontrainte prévue soit atteinte.

8. Dispositif selon l'une des revendications 5 à 7, **caractérisé par le fait que** les dispositifs de mesure de longueur présentent, selon les impératifs définis, des systèmes de mesure optique, mécanique ou capacitive.

9. Procédé selon la revendication 8, **caractérisé par le fait que**, selon les impératifs définis, on combinera différents systèmes de mesure.
